# FASCICULE DE BREVET EUROPEEN

(11) **EP 1 839 955 B1**
(45) Date de publication et mention de la délivrance du brevet: **13.01.2010**
(21) Numéro de dépôt: 07300892.2
(22) Date de dépôt: 22.03.2007
(51) Int. Cl.: B60R 13/08, B60N 3/04, B60R 13/02, F16B 5/06

(54) **Agencement d'habillage entre deux pièces pour un habitacle d'un véhicule automobile**
Verkleidungsanordnung zwischen zwei Teilen für ein Fahrerhaus eines Kraftfahrzeugs
Covering arrangement between two parts for an automobile passenger compartment

(30) Priorité: 23.03.2006 FR 0651014
(43) Date de publication de la demande: 03.10.2007
(73) Titulaire: RENAULT S.A.S., 92100 Boulogne Billancourt (FR)
(72) Inventeur: Brissard, Pierre, 78000, VERSAILLES (FR); Guerlin, Philippe, 91540 MENNECY (FR)

(56) Documents cités:
- EP-A2- 1 431 113
- DE-A1- 19 845 663
- DE-B3- 10 330 888
- DE-U1- 9 016 691
- US-A- 5 724 703

## Description

### DOMAINE TECHNIQUE

La présente invention concerne un agencement d'habillage comprenant une première pièce, par exemple en un matériau souple de type moquette, et une deuxième pièce, par exemple en un matériau rigide de type polymère. L'invention se rapporte également à un tel agencement d'habillage plus spécifiquement destiné à recouvrir une partie d'un habitacle d'un véhicule automobile.

Un véhicule automobile comprend un habitacle dont l'intérieur est constitué de nombreux matériaux différents. Pour obtenir des véhicules plus légers, les pièces métalliques sont progressivement remplacées par des pièces en matériaux plastiques ou polymères, par exemple des polyéthylènes et/ou des polypropylènes.

Pour accroître le confort du conducteur et des passagers, des matériaux permettant de générer des sensations visuelles et tactiles particulièrement agréables ont été rajoutés, comme par exemple des bois, des tissus et/ou des moquettes. Ces matériaux ont pour but de cacher la tôle constitutive de la caisse du véhicule et de former un environnement absorbeur des bruits du moteur et conservant la chaleur.

Outre les qualités de solidité et d'aspect des matériaux utilisés, le consommateur recherche plus en plus une qualité de finition pour son véhicule. Une telle finition est ainsi également liée à la qualité et à la durabilité de la solidarisation entre une feuille en un matériau souple, tel qu'une moquette, et une plaque en un matériau rigide, tel qu'un polymère. La solidarisation entre une première pièce de moquette et une deuxième pièce de polymère doit résister à des contraintes en traction dans le plan. De plus, une telle solidarisation doit être facilement et très rapidement réalisable par les opérateurs lors de la fabrication du véhicule.

### ÉTAT DE LA TECHNIQUE ANTÉRIEURE

Pour assurer un plaquage d'une pièce souple contre une pièce rigide, ces deux pièces étant conformées en trois dimensions, une première solution consiste à rajouter des blocs de mousse. Ces mousses sont coincées ou collées dans les corps creux de la tôlerie de la caisse du véhicule. Ces blocs de mousse jouent le rôle de contre-réaction. Une deuxième solution est de tenir mécaniquement la moquette par des fûts avec ajout de rondelles de serrage. Une telle deuxième solution est connue sous le nom de « boutrollage ».

Cependant, de telles solutions s'avèrent coûteuses en termes de main d' oeuvre, de temps de montage nécessaires et de coûts. De plus, en raison d'un mauvais plaquage, les trous et les jeux entre les pièces ne vont pas pouvoir être complètement éliminés ou vont apparaître au cours du temps.

Le document EP- 0.101.568 décrit une structure pour attacher une pièce de moquette à la tôle de la caisse d'un véhicule. Un premier élément permet de guider la pièce de moquette et de la coincer contre la tôle à l'aide d'une encoche découpée en dents de scie. Un deuxième élément formant un cache vient recouvrir l'encoche et plaquer la moquette contre le premier élément.

Cette fixation de la pièce de moquette selon l'art antérieur s'avère complexe à mettre en oeuvre lors de la fabrication, en raison de la multiplication du nombre de pièces nécessaires pour maintenir le plaquage de la moquette.

On connaît d'après le document EP- 1.431.113 une pièce de fixation et de rigidification d'une pièce plate, comprenant une plateforme munie de plusieurs pattes. L'une des pattes est en forme d'arceau sous lequel passe l'élément plat. Les autres pattes s'étendent au-dessus de la plateforme, de façon à définir des logements pour l'insertion d'un rebord de la pièce plate.

Cependant, une telle plateforme doit être surajoutée au niveau de la zone sur laquelle doit être fixée le rebord de la pièce plate. De plus, l'écartement entre la surface de la plateforme et les pattes est fixé d'avance et doit être choisi en fonction de l'épaisseur de la pièce plate à maintenir. Aucune adaptation à d'autres types de pièces plates n'est donc possible sans redimensionner la plateforme. Enfin, la tenue en traction de la pièce plate sur la plateforme n'est pas garantie par les pattes.

Dans le document US-5 724 703, il est décrit un dispositif de maintien comprenant plusieurs mâchoires articulées, dont les faces destinées à venir en regard portent des dents. Des opérations spécifiques de fermeture des mâchoires sur une pièce de moquette à immobiliser et de mise en place d'agrafes de maintien des mâchoires en position fermée sont nécessaires, de même que l'emploi de pièces supplémentaires, à savoir ces mâchoires.

### EXPOSÉ DE L'INVENTION

Un problème principal que se propose de résoudre l'invention consiste à mettre au point un agencement d'habillage, pour un véhicule automobile, avec une première pièce par exemple en un matériau de type moquette, et une deuxième pièce, par exemple en un matériau de type polymère rigide. Un deuxième problème est d'optimiser la fixation de la première pièce à la deuxième pièce. Un troisième problème consiste à réaliser une liaison mécanique entre une pièce moquette et une pièce polymère munie d'un logement intégré, sans ajout de pièces supplémentaires et sans utiliser la tôle de la caisse du véhicule. Un quatrième problème est d'obtenir un plaquage complet de la première pièce contre la deuxième pièce. Un autre problème encore est de pouvoir réaliser en usine un montage simple et résistant en traction, entre une première pièce et une deuxième pièce.

L'invention concerne donc un agencement d'habillage tel que défini par la revendication 1 annexée.

En d'autres termes, les moyens de maintien de la première pièce comprennent une patte analogue à une pince comprenant des moyens de blocage, avec une ou plusieurs excroissances, servant à assurer un coincement d'un rebord de cette première pièce. La première pièce s'insère entre la patte et la deuxième pièce, de façon à y être maintenue.

Grâce à la patte et à ses moyens de blocage, la première pièce est appliquée contre la deuxième pièce, sans plis ni gondolements, et sans découpes ni déchirures. Avec l'invention, même si les premières et deuxièmes pièces présentent des conformations en trois dimensions, les jeux entre ces pièces et les trous ne peuvent pas survenir lors du montage ou au cours de l'utilisation.

L'excroissance ou les excroissances peuvent favorablement se déployer sensiblement perpendiculairement à la surface principale de la deuxième pièce. Par voie de conséquence, l'excroissance ou les excroissances peuvent se déployer sensiblement perpendiculairement à la surface de la patte.

De manière particulièrement préférentielle, l'excroissance ou les excroissances peuvent être une nervure ou plusieurs nervures. Afin d'obtenir une ou plusieurs lignes de maintien suffisantes, la nervure ou les nervures peuvent avantageusement se déployer sensiblement sur toute la longueur de la patte, longitudinalement au sens d'introduction de la zone en rebord de la première pièce.

Pour permettre une introduction de la première pièce sans difficulté et sans blocage au départ, la nervure ou les nervures peuvent préférentiellement présenter une tranche incurvée d'entrée de la première pièce. Egalement pour éviter de plier la première pièce lors de son introduction et pour proposer une bouche d'introduction plus large, la patte peut de préférence présenter un rebord transversal évasé d'entrée de la première pièce.

La patte s'étendant au-dessus de la surface principale de la deuxième pièce peut se déployer à partir d'au moins deux jambages latéraux. La hauteur de ces deux jambages latéraux défini l'écartement de la patte par rapport à la surface principale de la deuxième pièce.
Une zone complémentaire de la zone en rebord de la première pièce peut avantageusement s'étendre entre les deux jambages latéraux de la patte. Cette zone complémentaire forme une langue d'introduction du rebord de la première pièce, et permet si nécessaire une fixation supplémentaire de la première pièce sur la deuxième pièce.

Deux nervures peuvent prolonger les deux jambages latéraux de la patte. La patte peut comprendre une découpe située au droit de la zone complémentaire de la zone en rebord de la première pièce. Avec cette découpe, une fixation supplémentaire de la zone complémentaire est facilement réalisable.

De façon à pouvoir assurer une telle fixation supplémentaire, la deuxième pièce peut comprend au moins une partie convexe. La ou les parties convexes peuvent être aptes à coopérer avec une ouverture de la zone en rebord de la première pièce. Cette fixation permet la tenue en traction de la première pièce, par rapport à la deuxième pièce.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective d'un agencement d'habillage entre une première pièce et une deuxième pièce ;
- la Figure 2 représente une vue du dessus en perspective des moyens de maintien de la première pièce avec la deuxième pièce ;
- la Figure 3 représente une vue du dessous en perspective éclatée des moyens de maintien de la Figure 2, avec la première pièce prête à être introduite dans les moyens de maintien de la deuxième pièce ;
- la Figure 4 représente une vue en coupe longitudinale des moyens de maintien de la première pièce avec la deuxième pièce.

### EXPOSÉ DÉTAILLÉ DE MODES DE RÉALISATION PRÉFÉRÉS

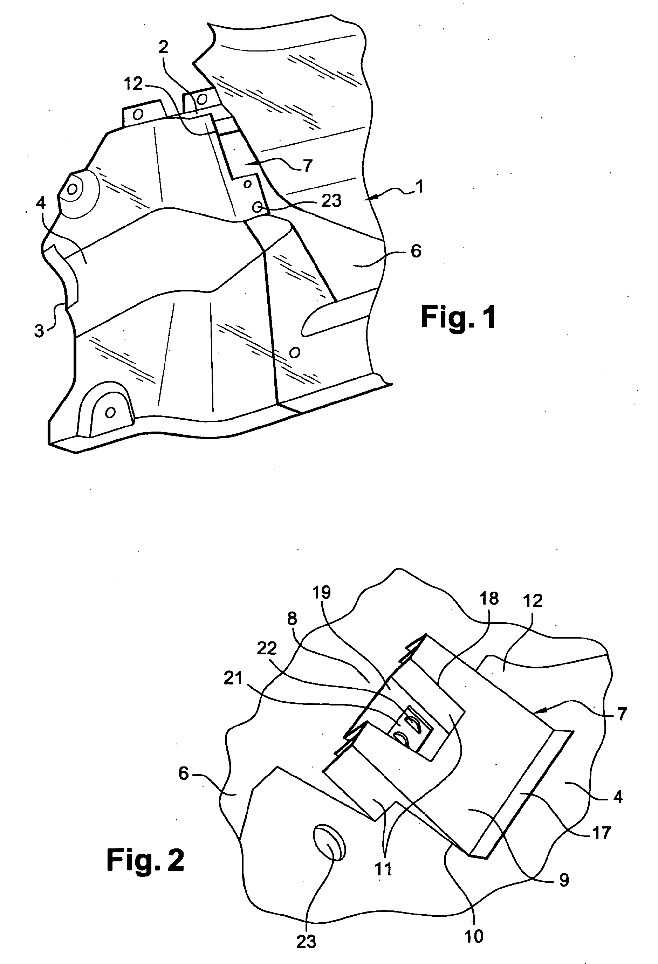

Comme l'illustre la Figure 1, un habitacle (1) d'un véhicule automobile est formé par une caisse de carrosserie réalisé en tôle (2). Au niveau d'un passage de roue (3), une première pièce de moquette conformée (4) recouvre une première partie de la tôle (2). Une deuxième pièce en polymère conformée (6) recouvre une deuxième partie de la tôle (2).

Pour permettre une liaison mécanique entre la pièce de moquette (4) et la pièce de polymère (6), cette dernière comprend des moyens de maintien sous la forme d'une patte (7), faisant saillie à partir de la surface principale supérieure (8) de la pièce de polymère (6).

La patte (7) est formée par une plaquette (9), sensiblement parallèle à la surface principale supérieure (8) et surplombant cette surface principale supérieure (8) de la pièce de polymère (6). Un logement (10) est délimité par la plaquette (9) et la surface principale supérieure (8) recouverte par cette plaquette (9).

La plaquette (9) se déploie vers le haut, par rapport à la surface principale supérieure (8) de la pièce de polymère (6), en étant montée sur des jambages latéraux (11). Ces jambages (11) sont orientés longitudinalement. La hauteur des jambages (11) détermine l'épaisseur du logement (10) et ainsi l'épaisseur maximale pour une zone en rebord (12) de la pièce de moquette (4).

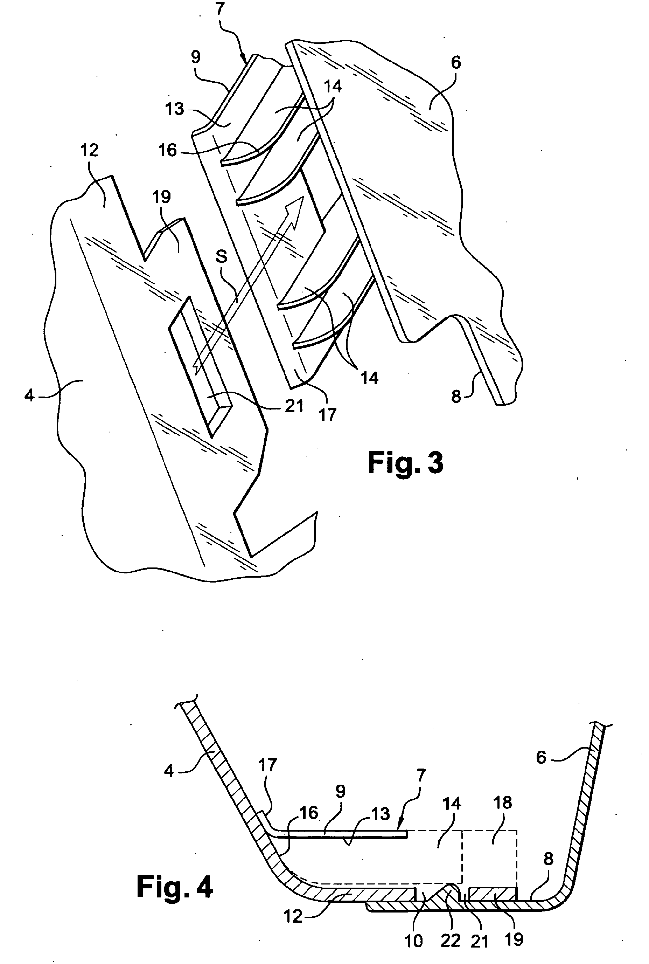

La zone en rebord (12) de la pièce de moquette (4) vient se glisser (Flèche S en Figure 3) à l'intérieur du logement (10), entre une face inférieure (13) de la plaquette (9) et la surface principale supérieure (8) de la pièce de polymère (6), recouverte par la plaquette (9).

Selon l'invention, la face inférieure (13) de la plaquette (9) est munie de plusieurs excroissances. Dans ce mode de réalisation, ces excroissances sont des nervures (14). Les nervures (14), au nombre de quatre, se déploient à partir de la face inférieure (13) et sont orientées en direction de la surface principale supérieure (8) de la pièce de polymère (6). Ces nervures (14) ne touchent pas la surface principale supérieure (8), laissant un passage pour la zone en rebord (12). Ces nervures (14) jouent le rôle de moyens de blocage de la pièce de moquette (4) par sa zone en rebord (12).

Les nervures (14) sont orientées dans le sens longitudinal de la plaquette (9), correspondant au sens d'introduction (Flèche S) du rebord (12) dans le logement (10) sous la patte (7). Les nervures (14) sont prévues en étant perpendiculaires à la face inférieure (13) de la plaquette (9). Les nervures (14) se retrouvent ainsi perpendiculaires à la surface principale supérieure (8) de la pièce de polymère (6). Les nervures (14) se retrouvent également perpendiculaires à la zone en rebord (12) de la pièce de moquette (4).

Les nervures (14) s'étendent sur toute la longueur de la plaquette (9). Deux des nervures (14) forment la prolongation de deux des jambages latéraux (11).

Les nervures (14) possèdent chacune une arête ou tranche avant (16) arrondie ou avec une courbure. La tranche (16) de chacune des nervures (14) est ainsi incurvée d'avant en arrière, c'est-à-dire dans le sens d'introduction (Flèche S) du rebord (12) sous la plaque (7). Le centre du rayon de courbure est sensiblement placé au niveau de la plaquette (9).

La plaquette (9) de la patte (7) comprend un rebord transversal avant (17). Il s'agit du rebord situé à proximité de la tranche incurvée (16) des nervures (14). Pour permettre une introduction aisée du rebord (12) de la pièce de moquette (4) et/ou pour permettre à la pièce de moquette (4) de suivre la conformation de la tôle (12), le rebord transversal avant (17) est évasé. Ce rebord transversal (17) est de ce fait recourbé vers le haut, c'est-à-dire à l'opposé de la surface principale supérieure (8) de la pièce de polymère (6). De cette manière la section d'entrée du logement (10) va être augmentée.

Une découpe (18) est ménagée dans la plaquette (9) de la patte (7). La découpe (18), de forme sensiblement carrée, se trouve à l'arrière de la plaquette (7), à l'opposé du rebord transversal avant (17). Cette découpe (18) est délimitée par deux des jambages latéraux internes (11). Les deux jambages latéraux internes (11) se poursuivent dans le sens longitudinal chacun par une nervure (14).

A la découpe (18) de la plaquette (9) correspond une zone complémentaire ou languette (19) de la pièce de moquette (4), s'étendant dans le plan au delà du rebord (12). La découpe (18) se trouve perpendiculairement sous la languette (19). A la fin de l'introduction (Flèche S) de la pièce de moquette (4) dans le logement (10), la languette (19) se place entre les deux jambages latéraux internes (11) de la patte (7).

Une ouverture (21) est ménagée dans la languette (19). Deux parties convexes sous la forme d'ergots (22) font saillie vers le haut, à partir de la surface principale (8) de la pièce de polymère (6). La coopération de ces ergots (22) avec l'ouverture (21) sert à empêcher tout retour à l'opposé du sens d'introduction (S) et toute sortie de la languette (19), du rebord (12) et donc de la pièce de moquette (4) hors du logement (10).

D'autres moyens de fixation (23) peuvent être prévus entre la première pièce de moquette (4) et la deuxième pièce de polymère (6).

La présente invention n'est pas limitée aux modes de réalisation décrits et illustrés. De nombreuses modifications peuvent être réalisées, le cadre étant défini par la portée du jeu de revendications.

## Revendications

1. Agencement d'habillage pour un habitacle (1) d'un véhicule automobile comprenant :
- une première pièce (4), formant une première garniture en un matériau de type moquette, et
- une deuxième pièce (6), formant une deuxième garniture en un matériau de type polymère, présentant des moyens de maintien de la première pièce sous la forme d'une patte (7), s'étendant au-dessus d'une surface principale (8) de la deuxième pièce (6), un logement (10) étant défini entre la patte (7) et la surface principale (8) de ladite deuxième pièce (6), à l'intérieur duquel vient s'insérer une zone en rebord (12) de ladite première pièce (4),
**caractérisé en ce que** la patte (7) de ladite deuxième pièce (6) présente au moins une excroissance (14), se déployant dans le logement (10) en direction de la surface principale (8) de ladite deuxième pièce (6), de façon à ce que la zone en rebord (12) de ladite première pièce (4) soit bloquée par coincement lors de son insertion entre l'excroissance (14) et ladite surface principale (8) de ladite deuxième pièce (6).

2. Agencement selon la revendication 1, **caractérisé en ce que** l'excroissance (14) se déploie sensiblement perpendiculairement à la surface principale (8) de la deuxième pièce (6).

3. Agencement selon la revendication 1 ou 2, **caractérisé en ce que** l'excroissance est une nervure (14).

4. Agencement selon la revendication 3, **caractérisé en ce que** la nervure (14) se déploie sensiblement sur toute la longueur de la patte (7), longitudinalement au sens d'introduction de la zone en rebord (12) de la première pièce (4).

5. Agencement selon la revendication 3 ou 4, **caractérisé en ce que** la nervure (14) présente une tranche incurvée (16) d'entrée de la première pièce (4).

6. Agencement selon l'une quelconque des revendications précédentes, **caractérisé en ce que** la patte (7) présente un rebord transversal évasé (17) d'entrée de la première pièce (4).

7. Agencement selon l'une quelconque des revendications précédentes, **caractérisé en ce que** la patte (7) s'étendant au-dessus de la surface principale (8) de la deuxième pièce (6) se déploie à partir d'au moins deux jambages latéraux (11).

8. Agencement selon la revendication 7, **caractérisé en ce qu'**une zone complémentaire (19) de la zone en rebord (12) de la première pièce (4) s'étend entre les deux jambages latéraux (11) de la patte (7).

9. Agencement selon la revendication 7 ou 8, **caractérisé en ce que** deux nervures (14) prolongent les deux jambages latéraux (11) de la patte (7).

10. Agencement selon la revendication 8 ou 9, **caractérisé en ce que** la patte (7) comprend une découpe (18) située au droit de la zone complémentaire (19) de la zone en rebord (12) de la première pièce (4).

11. Agencement selon l'une quelconque des revendications précédentes, **caractérisé en ce que** la deuxième pièce (6) comprend au moins une partie convexe (22), apte à coopérer avec une ouverture (21) de la zone en rebord (12) de la première pièce (4).

## Claims

1. Covering arrangement for a passenger compartment (1) of a motor vehicle, comprising:
- a first part (4) forming a first trim made of a material of the carpet type, and
- a second part (6), forming a second trim made of a material of polymer type, having means of holding the first part in position, these means being in the form of a tab (74), extending over a main surface (8) of the second part (6), a housing (10) being defined between the tab (7) and the main surface (8) of the said second part (6), into which housing an edging region (12) of the said first part (4) can be inserted,
**characterized in that** the tab (7) of the said second part (6) has at least one protrusion (14) standing out into the housing (10) in the direction of the main surface (8) of the said second part (6), so that the edging region (12) of the said first part (4) is wedged when inserted between the protrusion (14) and the said main surface (8) of the said second part (6).

2. Arrangement according to Claim 1, **characterized in that** the protrusion (14) stands out substantially perpendicular to the main surface (8) of the second part (6).

3. Arrangement according to Claim 1 or 2, **characterized in that** the protrusion is a rib (14).

4. Arrangement according to Claim 3, **characterized in that** the rib (14) stands out substantially over the entire length of the tab (7), longitudinally with respect to the direction in which the edging region (12) of the first part (4) is inserted.

5. Arrangement according to Claim 3 or 4, **characterized in that** the rib (14) has a curved edge face (16) at the entrance for the first part (4).

6. Arrangement according to any one of the preceding claims, **characterized in that** the tab (7) has a flared transverse edging (17) for the entrance of the first part (4).

7. Arrangement according to any one of the preceding claims, **characterized in that** the tab (7) extending above the main surface (8) of the second part (6) stands up on at least two lateral legs (11).

8. Arrangement according to Claim 7, **characterized in that** a complementary region (19) of the edging region (12) of the first part (4) extends between the two lateral legs (11) of the tab (7).

9. Arrangement according to Claim 7 or 8, **characterized in that** two ribs (14) extend the two lateral legs (11) of the tab (7).

10. Arrangement according to Claim 8 or 9, **characterized in that** the tab (7) has a cutout (18) situated in line with the complementary region (19) of the edging region (12) of the first part (4).

11. Arrangement according to any one of the preceding claims, **characterized in that** the second part (6) comprises at least one convex portion (22) able to collaborate with an opening (21) in the edging region (12) of the first part (4).

## Patentansprüche

1. Verkleidungsanordnung für eine Fahrgastzelle (1) eines Kraftfahrzeugs, die aufweist:
- ein erstes Teil (4), das einen ersten Belag aus einem Material des Typs Teppich bildet, und
- ein zweites Teil (6), das einen zweiten Belag aus einem Material des Typs Polymer bildet und das Mittel zum Halten des ersten Teils in Form einer Lasche (7) aufweist, die sich über einer Hauptoberfläche (8) des zweiten Teils (6) erstreckt, wobei ein Aufnahmesitz (10) zwischen der Lasche (7) und der Hauptoberfläche (8) des zweiten Teils (6) definiert ist, in dessen Innenraum sich eine Randzone (12) des ersten Teils (4) einsetzen lässt,
**dadurch gekennzeichnet, dass** die Lasche (7) des zweiten Teils (6) mindestens eine Ausstülpung (14) aufweist, die sich in dem Aufnahmesitz (10) in Richtung der Hauptoberfläche (8) des zweiten Teils (6) ausbreitet, so dass die Randzone (12) des ersten Teils (4), während sie eingefügt wird, durch Einklemmen zwischen die Ausstülpung (14) und die Hauptoberfläche (8) des zweiten Teils (6) verriegelt wird.

2. Anordnung nach Anspruch 1, **dadurch gekennzeichnet, dass** sich die Ausstülpung (14) im Wesentlichen senkrecht zur Hauptoberfläche (8) des zweiten Teils (6) ausbreitet.

3. Anordnung nach Anspruch 1 oder 2, **dadurch gekennzeichnet, dass** die Ausstülpung eine Rippe (14) ist.

4. Anordnung nach Anspruch 3, **dadurch gekennzeichnet, dass** sich die Rippe (14) im Wesentlichen auf der ganzen Länge der Lasche (7) längs der Einführungsrichtung der Randzone (12) des ersten Teils (4) ausbreitet.

5. Anordnung nach Anspruch 3 oder 4, **dadurch gekennzeichnet, dass** die Rippe (14) einen gekrümmten Abschnitt (16) für den Eintritt des ersten Teils (4) aufweist.

6. Anordnung nach einem der vorangehenden Ansprüche, **dadurch gekennzeichnet, dass** die Lasche (7) einen aufgeweiteten transversalen Rand (17) für den Eintritt des ersten Teils (4) aufweist.

7. Anordnung nach einem der vorangehenden Ansprüche, **dadurch gekennzeichnet, dass** sich die Lasche (7), die sich über der Hauptoberfläche (8) des zweiten Teils (6) erstreckt, ausgehend von mindestens zwei seitlichen Stützen (11) ausbreitet.

8. Anordnung nach Anspruch 7, **dadurch gekennzeichnet, dass** sich eine Zusatzzone (19) der Randzone (12) des ersten Teils (4) zwischen den zwei seitlichen Stützen (11) der Lasche (7) erstreckt.

9. Anordnung nach Anspruch 7 oder 8, **dadurch gekennzeichnet, dass** zwei Rippen (14) die zwei seitlichen Stützen (11) der Lasche (7) verlängern.

10. Anordnung nach Anspruch 8 oder 9, **dadurch gekennzeichnet, dass** die Lasche (7) einen Einschnitt (18) aufweist, der am Ort der Zusatzzone (19) der Randzone (12) des ersten Teils (4) liegt.

11. Anordnung nach einem der vorangehenden Ansprüche, **dadurch gekennzeichnet, dass** das zweite Teil (6) mindestens einen konvexen Abschnitt (22) aufweist, der mit einer Öffnung (21) der Randzone (12) des ersten Teils (4) zusammenwirken kann.
